# EUROPEAN PATENT SPECIFICATION

(11) **EP 2 789 765 B1**
(45) Date of publication and mention of the grant of the patent: **30.01.2019**
(21) Application number: 14163653.0
(22) Date of filing: 07.04.2014
(51) Int. Cl.: E04F 13/08, E04F 13/14, C04B 28/02, C04B 111/00, E04C 2/288

(54) **Stone panel formed unitary with insulation material for covering a wall and method for manufacturing it**
Steinpaneel, das einheitlich mit einem Dämmstoff ausgeführt ist für die Verkleidung einer Wand und Herstellungsverfahren hierfür
Panneau de pierre monté de manière unitaire avec un matériau isolant pour revêtir un paroi et son procédé de fabrication

(30) Priority: 08.04.2013 KR 20130037930
(43) Date of publication of application: 15.10.2014
(73) Proprietor: LG Hausys, Ltd., Seoul 150-721 (KR)
(72) Inventor: Ko, Hae Seung, Gyeonggi-do 431-839 (KR)
(74) Representative: Goddar, Heinz J.

(56) References cited:
- EP-A1- 0 059 776
- EP-A1- 1 298 262
- EP-A2- 2 138 324
- WO-A1-2010/030206
- DE-A1- 1 659 269
- DE-A1- 19 519 116
- DE-U1- 8 714 303
- DE-U1-202011 106 938

## Description

### [Technical Field]

The present invention relates to a stone panel formed unitarily with an insulating material for a wall and a method for manufacturing the same, and more particularly, to a stone panel formed unitarily with an insulating material for a wall and a method for manufacturing the same wherein an upper finishing material such as natural stone and artificial stone for an exterior wall of a building is coupled unitarily to a lower insulating board by means of an adhesive layer, thus having a function of outside insulation, making it convenient in construction, and reducing the construction cost.

### [Background Art]

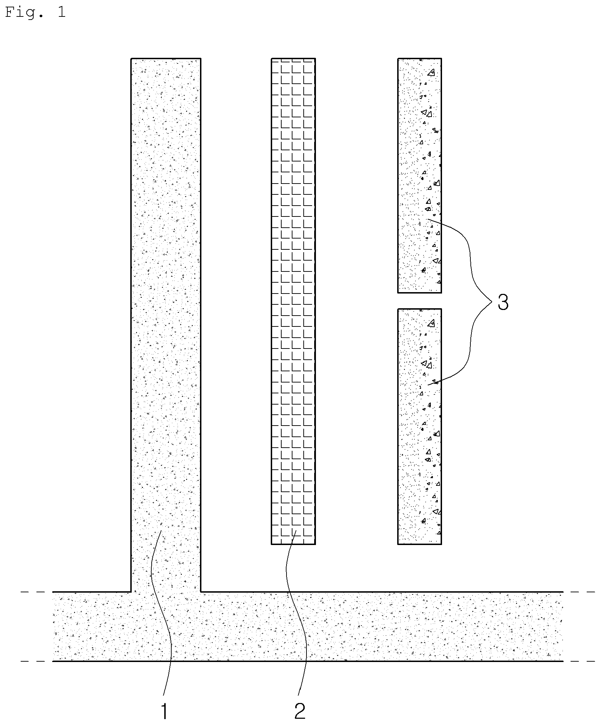

Referring to an existing method for finally finishing the exterior wall of a building in the construction process of the building, as shown in FIG.1, an insulating material 2 such as a glass wool or an EPS (expanded polystyrene) board called 'Styrofoam' is installed in front of a frame 1 of the building, and next, exterior finishing materials 3 like natural stone, artificial stone, or bricks are installed in front of the insulating material 2.

In this case, the artificial stone typically used as an exterior material for construction is made by mixing a cement base with all kinds of natural stone chips, pressing the mixture, and having an outer appearance of granite through surface treatment.

Further, asbestos is completely prohibited in import, production, distribution and use thereof after 2009, and instead of the asbestos, accordingly, glass wool has been widely used as an insulating material. Particularly, a plurality of holes is formed on a glass wool made to a shape of a mat, and the glass wool is cut to a thickness of the panel to be made.

However, the insulating material 2 is installed in front of the frame 1 of the building, and additionally, the exterior finishing materials 3 are installed in front of the insulating material 2, so that the whole process becomes complicated to cause the period of construction to be extended or delayed, thus increasing the construction cost or causing additional costs.

As another conventional practice, Korean Patent Laid-Open Application No. 10-2006-0060938 discloses a method for manufacturing a finishing material for an interior wall and the finishing material, wherein the finishing material includes: a base plate; a stone powder layer; a marble particle layer; and a polished layer, and the method includes the steps of applying the stone powder or marble particles agitated with water paint having a desired color to be handycoated to the base plate and being subjected to pressing, sanding, and polishing processes, thus providing various outer appearances.

Until now, however, there is no suggestion for a stone panel formed unitarily with an insulating material for a wall, while providing a function of outside insulation and making it convenient in construction.

EP 0 059 776 A1 discloses a stone panel formed unitarily with an insulating material for a wall, the stone panel comprising: an upper finishing material, wherein the upper finishing material is artificial stone; a lower insulating board; and an adhesive layer for unitarily coupling the upper finishing material and the lower insulating board with each other, wherein the upper finishing material and the lower insulating board are laid crosswise onto each other in such a manner as to have exposed portions to a shape of "□" or "∟" with respect to each other.

### [Disclosure]

### [Technical Problem]

Accordingly, the present invention has been made in view of the above-mentioned problems occurring in the prior art, and it is an object of the present invention to provide a stone panel formed unitarily with an insulating material for a wall.

It is another object of the present invention to provide a method for manufacturing a stone panel formed unitarily with an insulating material for a wall.

### [Technical Solution]

To accomplish the above objects, according to a first aspect of the present invention, there is provided a stone panel formed unitarily with an insulating material for a wall, the stone panel comprising: an upper finishing material, wherein the upper finishing material is artificial stone; a lower insulating board; and an adhesive layer for unitarily coupling the upper finishing material and the lower insulating board with each other, wherein the upper finishing material and the lower insulating board are laid crosswise onto each other in such a manner as to have exposed portions to a shape of '□' or '∟' with respect to each other, wherein the artificial stone is made of cement paste containing 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent, the adhesive layer comprises an epoxy adhesive, and wherein the lower insulating board is laid crosswise onto the upper finishing material in such a manner as to be protruded outwardly from the upper finishing material by a distance of 10 mm to 40 mm.

To accomplish the above objects, according to a second aspect of the present invention, there is provided a method for manufacturing a stone panel formed unitarily with an insulating material for a wall, the method comprising the steps of: cutting an upper finishing material to a given size, wherein the upper finishing material is artificial stone; cutting a lower insulating board to the size equal to or larger than the upper finishing material; applying an adhesive to the underside of the upper finishing material to form the adhesive layer; and laying the lower insulating board onto the underside of the upper finishing material on which the adhesive layer is formed, curing the adhesive layer and unitarily coupling the upper finishing material and the lower insulating board with each other, wherein the upper finishing material and the lower insulating board are laid crosswise onto each other in such a manner as to have exposed portions to a shape of '□' or '∟' with respect to each other, wherein the the artificial stone is made of cement paste containing 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent, the adhesive layer comprises an epoxy adhesive, and wherein the lower insulating board is laid crosswise onto the upper finishing material in such a manner as to be protruded outwardly from the upper finishing material by a distance of 10 mm to 40 mm.

Further embodiments are disclosed in the dependent claims.

### [Advantageous Effects]

According to the present invention, the upper finishing material and the lower insulating board are coupled unitarily with each other by means of the adhesive layer, so that the conventional processes wherein an insulating material is installed on a frame of a building and then an exterior finishing material is additionally installed can be simplified to one process for installing the stone panel formed unitarily with the insulating material for a wall according to the present invention, thus advantageously providing simple construction, shortening the period of construction, and reducing the construction cost.

In addition, the stone panel formed unitarily with the insulating material for a wall according to the present invention is configured wherein after the upper finishing material and the lower insulating board are bonded to each other by means of the adhesive, a pressurizer is placed on the lower insulating board, pressurizes the lower insulating board during the adhesive layer is completely cured (for about 1 day), and then removed therefrom, thus achieving excellent coupling force between the upper finishing material and the lower insulating board, maintaining the airtight state therebetween to optimize the efficiency of outside insulation, and remarkably reducing the cost required for cooling and heating.

Further, the stone panel formed unitarily with the insulating material for a wall according to the present invention is configured wherein the upper finishing material and the lower insulating board are laid crosswise onto top of each other, thus causing the underside of the upper finishing material and the top of the lower insulating board to be partially exposed to a shape of '□' or '∟', so that when the exposed surface of the underside of the upper finishing material is laid onto the exposed surface of the top of the lower insulating board of another stone panel so as to connect a plurality of stone panels with each other, the flow of air from outdoors to indoors or from indoors to outdoors can stop on the portion laid between the upper finishing material of one stone panel and the lower insulating board of another stone panel, thus achieving excellent insulating effects.

### [Description of Drawings]

FIG.1 is a schematic view showing the construction structure of an exterior wall of a building in a conventional practice.
FIG.2 is a side view showing a stone panel formed unitarily with an insulating material for a wall according to the present invention.
FIG.3 is a plan view showing the stone panel formed unitarily with an insulating material for a wall according to the present invention.
FIG.4 is a plan view showing the constructed state of the stone panel formed unitarily with an insulating material for a wall according to the present invention.
FIG.5 is a detailed side view showing the flow of air between the gaps between stone panels in the constructed state of the stone panel formed unitarily with an insulating material for a wall according to the present invention.

### [Best Mode for Invention]

Hereinafter, an explanation on a stone panel formed unitarily with an insulating material for a wall according to the present invention will be in detail given with reference to the attached drawings.

Terms used herein are for the purpose of describing particular embodiments only and are not intended to be limiting of this disclosure. It will be understood that the terms defined in commonly used dictionaries should be interpreted as having a meaning that is consistent with their meaning in the context of the relevant art and will not be interpreted in an idealized or overly formal sense unless expressly so defined herein.

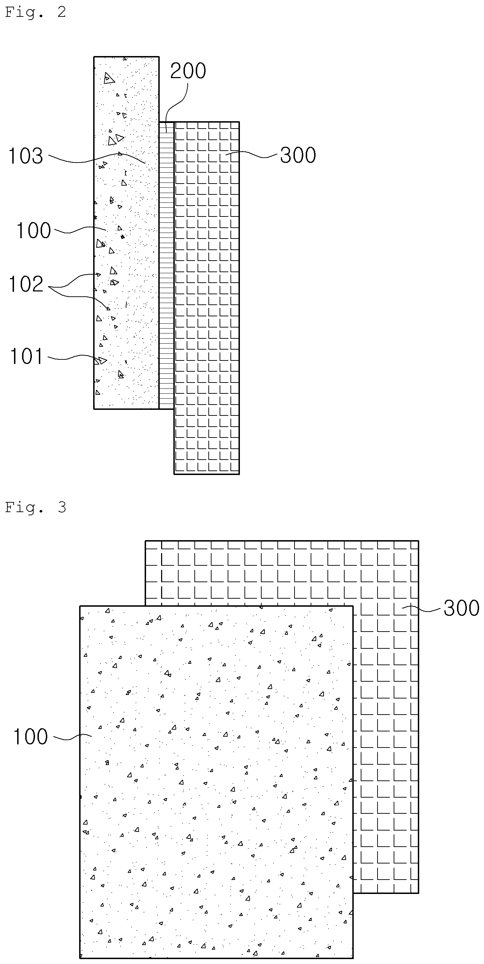

FIG.2 is a side view showing a stone panel formed unitarily with an insulating material for a wall according to the present invention, and FIG.3 is a plan view showing the stone panel formed unitarily with an insulating material for a wall according to the present invention.

The present invention relates to a stone panel formed unitarily with an insulating material for a wall, and more particularly, as shown in FIGS.2 and 3, to a stone panel formed unitarily with an insulating material for a wall wherein an upper finishing material 100 is formed unitarily with a lower insulating board 300 by means of an adhesive layer 200.

According to the present invention, the upper finishing material 100 is an exterior finishing material constituting the exterior wall of a building after construction, which is artificial stone.

The artificial stone is an artificial molded body having the texture of natural stone that is obtained by mixing natural stone powder or minerals with resin components like acrylic resin, unsaturated polyester resin, epoxy resin and so on and by adding various pigments and additives to the mixture, and accordingly, the artificial stone includes one selected from resin artificial stone like acrylic resin artificial stone or polyester resin artificial stone and inorganic artificial stone like cement artificial stone or limestone artificial stone.

The cement artificial stone is used as the inorganic artificial stone, which is made of cement paste having 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent.

Further, the upper finishing material 100 desirably takes a form of a board for the convenience of the wall construction.

According to the present invention, the adhesive layer 200 is applied evenly to one surface of the upper finishing material 100 to a thickness of 0.5 mm to 1.5 mm with an epoxy adhesive for a stone panel.

According to the present invention, the lower insulating board 300 is laid unitarily onto the upper finishing material 100 by means of the adhesive layer 200, and includes one selected from organic insulating boards including an EPS board, polyurethane board, vermiculite board, phenol board, PVC board, PE board, and PP board.

So as to allow the lower insulating board 300 and the upper finishing material 100 to be rigidly and tightly coupled with each other, a pressurizer is placed on the lower insulating board 300 after the lower insulating board 300 is laid onto the upper finishing material 100, pressurizes the lower insulating board 300 during the adhesive layer 200 is completely cured (for about 1 day), and is then removed therefrom.

According to the present invention, therefore, the upper finishing material 100 and the lower insulating board 300 are coupled unitarily with each other by means of the adhesive layer 200, and so as to easily construct a plurality of stone panels for a wall, in this case, the upper finishing material 100 and the lower insulating board 300 are laid crosswise on top of each other. The underside of the upper finishing material 100 and the top of the lower insulating board 300 are laid onto each other in such a manner as to be exposed to a shape of '□' or '∟'.

Further, the lower insulating board 300 is bonded protrudedly outwardly from the upper finishing material 100 by the distance of 10 mm to 40 mm.

Furthermore, the lower insulating board 300 desirably has the size equal to or larger than the upper finishing material 100, and more desirably, the horizontal and vertical lengths of the lower insulating board 300 are larger by 1 mm to 10 mm than those of the upper finishing material 100.

According to the present invention, therefore, the upper finishing material 100 and the lower insulating board 300 are coupled unitarily with each other, so that the conventional process wherein the insulating material is installed on the frame of a building and then the exterior finishing material is additionally installed can be simplified to one process for installing the stone panel formed unitarily with the insulating material for a wall according to the present invention, thus advantageously providing simple construction, shortening the period of construction, and reducing the construction cost.

The stone panel formed unitarily with the insulating material for a wall according to the present invention is configured wherein after the upper finishing material 100 and the lower insulating board 300 are coupledly laid onto each other, the pressurizer is placed on the lower insulating board 300, pressurizes the lower insulating board 300 during the adhesive layer 200 is completely cured (for about 1 day), and is then removed therefrom, thus achieving excellent coupling force between the upper finishing material 100 and the lower insulating board 300, maintaining the airtight state therebetween to optimize the efficiency of outside insulation, and remarkably reducing the cost required for cooling and heating.

Additionally, the stone panel formed unitarily with the insulating material for a wall according to the present invention is configured wherein the upper finishing material 100 and the lower insulating board 300 are laid crosswise onto top of each other, thus causing the underside of the upper finishing material 100 and the top of the lower insulating board 300 to be partially exposed to a shape of '□' or '∟', so that when the exposed surface of the underside of the upper finishing material 100 is laid onto the exposed surface of the top of the lower insulating board 300 of another stone panel so as to connect a plurality of stone panels with each other, the flow of air from outdoors to indoors or from indoors to outdoors can stop on the portion laid between the upper finishing material 100 of one stone panel and the lower insulating board 300 of another stone panel, thus achieving excellent insulating effects.

Further, the present invention relates to a method for manufacturing a stone panel formed unitarily with an insulating material for a wall, the method comprising the steps of: cutting an upper finishing material to a given size, wherein the upper finishing material is artificial stone; cutting a lower insulating board to the size equal to or larger than the upper finishing material; applying an adhesive to the underside of the upper finishing material to form the adhesive layer; and laying the lower insulating board onto the underside of the upper finishing material on which the adhesive layer is formed, curing the adhesive layer and unitarily coupling the upper finishing material and the lower insulating board with each other, wherein the upper finishing material and the lower insulating board are laid crosswise onto each other in such a manner as to have exposed portions to a shape of '□' or '∟' with respect to each other, wherein the the artificial stone is made of cement paste containing 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent, the adhesive layer comprises an epoxy adhesive, and wherein the lower insulating board is laid crosswise onto the upper finishing material in such a manner as to be protruded outwardly from the upper finishing material by a distance of 10 mm to 40 mm.

Now, a process for making the upper finishing material 100, for example, cement artificial stone will be explained.

First, cement paste serving as a binder of artificial stone is injected to a mold.

At this time, the cement paste contains 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent.

In this case, a reference numeral not explained yet denotes the natural chips having a length of 3 mm to 9 mm, 102 denotes natural chips having a length of 1 mm to 3 mm, and 103 denotes cement.

After that, the cement paste is poured into the mold and primarily vibrated for 10 seconds to 30 seconds through a separate vibrating machine. Next, the cement paste spreads out to a given thickness within the mold, and then, it is put into a vibrating chamber, to which vibration is applied for 10 seconds to 30 seconds, thus removing a plurality of large and small bubbles existing in the interior of the cement paste.

At this time, if the primary vibration time is less than 10 seconds, the cement paste does not spread out evenly to a given thickness within the mold, and contrarily, if the primary vibration time is more than 30 seconds, the cement paste has already spread out evenly to a given thickness within the mold, which unnecessarily consuming the time.

After that, vibration is secondarily applied to the mold for 1 minute to 5 minutes through the vibrating machine, so that the natural chips among the components existing in the interior of the cement paste are moved to the lower portion of the mold, thus maximizing the deposition rate of the natural chips.

At this time, if the secondary vibration time is less than 1 minute, the deposition rate of the natural chips is extremely low, and contrarily, if the secondary vibration time is more than 5 minutes, the deposition rate of the natural chips has been already maximized, which unnecessarily consuming the time.

After that, a temperature is maintained to 40°C to 50°C, and the cement paste is cured for 12 hours under the condition where constant humidity is kept.

At this time, if the temperature is out of the above-regulated range or if the time where the constant humidity is kept is less than 12 hours, the cement paste is not sufficiently cured.

After the curing is completed, the cured material is drawn from the mold and subjected to artificial stone grinding and cutting processes, thus obtaining the upper finishing material 100.

At this time, the design of the upper finishing material 100 is made variously in accordance with a user's or a constructer's preference, which is obtained to various forms through the final grinding process in accordance with the kinds or sizes of the natural chips used in the cement paste.

A process for manufacturing the stone panel formed unitarily with the insulating material for a wall by using the upper finishing material 100 will be as follows.

First, the upper finishing material 100 having a given size is prepared through a cutting process.

After that, the lower insulating board 300 is prepared. The lower insulating board 300 includes one selected from organic insulating boards including an EPS board, polyurethane board, vermiculite board, phenol board, PVC board, PE board, and PP board.

Through a cutting process, the lower insulating board 300 has the size equal to or larger than the upper finishing material 100. Desirably, the horizontal and vertical lengths of the lower insulating board 300 are larger by 3 mm to 5 mm than those of the upper finishing material 100.

Next, an epoxy adhesive for a stone panel is evenly applied to the underside of the upper finishing material 100 to form the adhesive layer 200. Desirably, the adhesive is applied to a thickness of 0.5 mm to 1.5 mm.

At this time, if the thickness of the epoxy adhesive for a stone panel is less than 0.5 mm, the bonding force is not sufficiently exerted after cured, and contrarily, if the thickness of the epoxy adhesive for a stone panel is more than 1.5 mm, an amount of adhesive applied is over the amount required for exertion of the bonding force, thus unnecessarily consuming the epoxy adhesive for a stone panel.

After that, the lower insulating board 300 is laid onto the underside of the upper finishing material 100 on which the adhesive layer 200 is formed. At this time, desirably, the upper finishing material 100 and the lower insulating board 300 are laid onto each other in such a manner as to be exposed to a shape of '□' or '∟' (see FIG.3).

When a portion of the upper finishing material 100 or the lower insulating board 300 is exposed to a shape of '□' or '∟', desirably, the width of the exposed portion is in the range between 15 mm and 25 mm.

After that, a pressurizer having a given weight is placed on the lower insulating board 300 after the lower insulating board 300 is laid on the upper finishing material 100 and pressurizes the lower insulating board 300 during the adhesive layer 200 is completely cured (for about 1 day).

After the epoxy adhesive for a stone panel has been completely cured, the pressurizer is removed from top of the lower insulating board 300, thus making the stone panel according to the present invention wherein the upper finishing material 100, the adhesive layer 200 and the lower insulating board 300 are sequentially laid on top of each other.

According to the present invention, as shown in FIG.3, in the state where one upper finishing material 100 and one lower insulating board 300 are laid on top of each other by means of the adhesive layer 200, the upper finishing material 100 and the lower insulating board 300 have the protruded corner portions to the shape of '□' or '∟'.

A method for constructing the stone panel formed unitarily with the insulating material for a wall according to the present invention will be explained below.

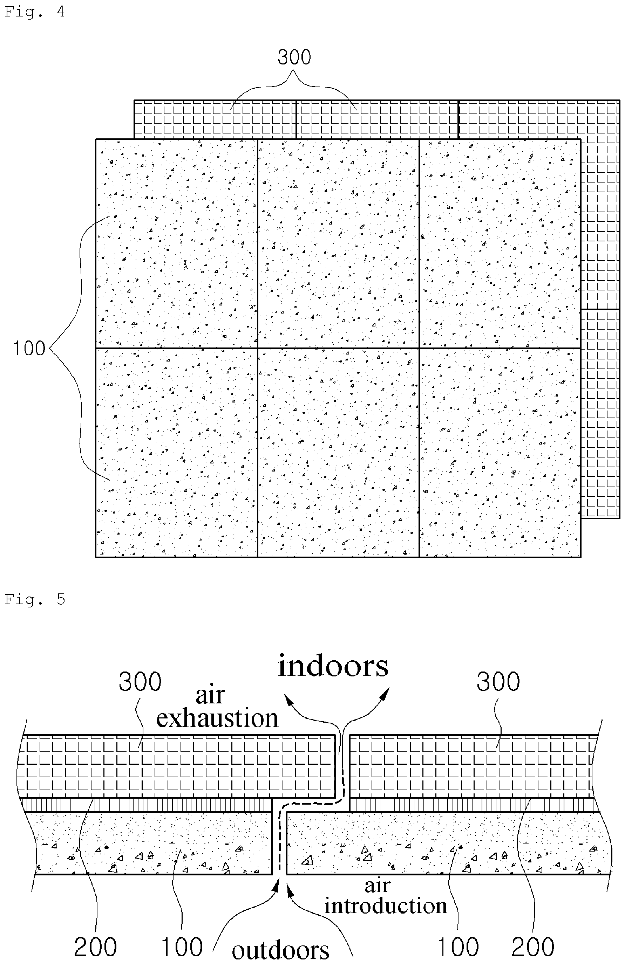

As shown in FIG.4, the protruded corner portions of the upper finishing materials 100 and the lower insulating boards 300 are arranged to have the same directions as each other.

In the conventional practice, after the insulating material 2 such as glass wool or an EPS board is installed in front of the frame 1 of the building, the exterior finishing materials 3 like natural stone, artificial stone, or bricks are installed in front of one surface of the insulating material 2 (see FIG.1).

In case of the conventional construction, external air is directly introduced into the indoors through the fine gaps between the neighboring external finishing materials 3 and between the neighboring insulating materials 2, and at the same time, the internal air of the building is directly exhausted to the outside, so that the insulating effect of the building becomes bad.

According to the present invention, however, the flow of air moving from outdoors to indoors or from indoors to outdoors collides against the upper finishing material 100 or the lower insulating board 300 protruded to the shape of '□' of the adjacent stone panel and is passed through a narrow gap having a shape of ' 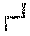 ' as shown in FIG.5 along the surface of the upper finishing material 100 or the lower insulating board 300, so that when compared with the conventional practice, the cost additionally required for cooling and heating in accordance with the introduction or exhaustion of air can be drastically reduced.

Further, as shown in FIG.4, the upper finishing materials 100 or the lower insulating boards 300 are arranged to have the same directions as each other, while the protruded corner portions thereof are being arranged uniformly to have the shape of '□' or '∟', so that if the respective stone panels are sequentially coupled to each other from the left side to the right side, the underside of the upper finishing material and the top of the lower insulating board protruded to the shape of '□' or '∟' in the neighboring stone panels are laid on top of each other, thus continuously correcting the position during the construction to make the construction convenient.

## Claims

1. A stone panel formed unitarily with an insulating material for a wall, the stone panel comprising:
an upper finishing material (100), wherein the upper finishing material (100) is artificial stone;
a lower insulating board (300); and
an adhesive layer (200) for unitarily coupling the upper finishing material (100) and the lower insulating board (300) with each other,
wherein the upper finishing material (100) and the lower insulating board (300) are laid crosswise onto each other in such a manner as to have exposed portions to a shape of '□' or '∟' with respect to each other, **characterized in that**
the artificial stone is made of cement paste containing 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent,
the adhesive layer (200) comprises an epoxy adhesive, and
wherein the lower insulating board (300) is laid crosswise onto the upper finishing material (100) in such a manner as to be protruded outwardly from the upper finishing material (100) by a distance of 10 mm to 40 mm.

2. The stone panel according to claim 1, wherein the lower insulating board (300) comprises any one selected from an EPS board, a phenol board, a polyurethane board, a vermiculite board, a PVC board, a PE board, and a PP board.

3. A method for manufacturing a stone panel formed unitarily with an insulating material for a wall, the method comprising the steps of:
cutting an upper finishing material (100) to a given size, wherein the upper finishing material (100) is artificial stone;
cutting a lower insulating board (300) to the size equal to or larger than the upper finishing material (100);
applying an adhesive to the underside of the upper finishing material (100) to form the adhesive layer (200); and
laying the lower insulating board (300) onto the underside of the upper finishing material (100) on which the adhesive layer (200) is formed, curing the adhesive layer (200) and unitarily coupling the upper finishing material (100) and the lower insulating board (300) with each other,
wherein the upper finishing material (100) and the lower insulating board (300) are laid crosswise onto each other in such a manner as to have exposed portions to a shape of '□' or '∟' with respect to each other, **characterized in that**
the artificial stone is made of cement paste containing 100 parts by weight of cement, 170-250 parts by weight of natural chips having a length of 3 mm to 9 mm, 70-100 parts by weight of natural chips having a length of 1 mm to 3 mm, 30-100 parts by weight of natural stone powder having a diameter of 0.04 mm to 0.14 mm, 25-35 parts by weight of water, and 1-3 parts by weight of a water reducing agent,
the adhesive layer (200) comprises an epoxy adhesive, and
wherein the lower insulating board (300) is laid crosswise onto the upper finishing material (100) in such a manner as to be protruded outwardly from the upper finishing material (100) by a distance of 10 mm to 40 mm.

4. The method according to claim 3, further comprising the step of pressurizing the lower insulating board (300) by means of a pressurizer after the lower insulating board (300) has been laid onto the underside of the upper finishing material 100 on which the adhesive layer (200) is formed.

## Patentansprüche

1. Steinpaneel, das einheitlich mit einem Isolationsmaterial für eine Wand ausgeführt ist, wobei das Steinpaneel umfasst:
ein oberes Abschlussmaterial (100), wobei das obere Abschlussmaterial (100) Kunststein ist;
eine untere Isolationsplatte (300); und
eine Haftstoffschicht (200) zum einheitlichen Koppeln des oberen Abschlussmaterials (100) und der unteren Isolationsplatte (300) miteinander,
wobei das obere Abschlussmaterial (100) und die untere Isolationsplatte (300) kreuzweise aufeinander in einer solchen Art und Weise gelegt sind, um exponierte Bereiche einer Form von " 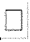 " oder "∟" in Bezug aufeinander aufzuweisen, **dadurch gekennzeichnet, dass**
der Kunststein aus Zementpaste hergestellt ist, enthaltend 100 Gewichtsteile Zement, 170 - 250 Gewichtsteile Naturchips mit einer Länge von 3 mm bis 9 mm, 70 - 100 Gewichtsteile Naturchips mit einer Länge von 1 mm bis 3 mm, 30 - 100 Gewichtsteile Natursteinpulver mit einem Durchmesser von 0,04 mm bis 0,14 mm, 25 - 35 Gewichtsteile Wasser und 1 - 3 Gewichtsteile eines Wasserreduktionsmittels,
wobei die Haftstoffschicht (200) einen Epoxyhaftstoff umfasst, und
wobei die untere Isolationsplatte (300) kreuzweise auf dem oberen Abschlussmaterial (100) in einer solchen Art und Weise gelegt ist, um nach außen von dem oberen Abschlussmaterial (100) in einem Abstand von 10 mm bis 40 mm hervorzustehen.

2. Steinpaneel nach Anspruch 1, wobei die untere Isolationsplatte (300) irgendeines umfasst, ausgewählt aus einer EPS-Platte, einer Phenolplatte, einer Polyurethanplatte, einer Vermiculitplatte, einer PVC-Platte, einer PE-Platte und einer PP-Platte.

3. Verfahren zum Herstellen eines Steinpaneels, das einheitlich mit einem Isolationsmaterial für eine Wand ausgeführt ist, wobei das Verfahren die Schritte umfasst:
Schneiden eines oberen Abschlussmaterials (100) auf eine gegebene Größe, wobei das obere Abschlussmaterial (100) Kunststein ist;
Schneiden einer unteren Isolationsplatte (300) auf eine Größe gleich oder größer als für das obere Abschlussmaterial (100);
Auftragen eines Haftstoffs auf die Unterseite des oberen Abschlussmaterials (100), um die Haftstoffschicht (200) zu bilden; und
Legen der unteren Isolationsplatte (300) auf die Unterseite des oberen Abschlussmaterials (100), auf der die Haftstoffschicht (200) gebildet ist, Härten der Haftstoffschicht (200) und einheitliches Koppeln des oberen Abschlussmaterials (100) und der unteren Isolationsplatte (300) miteinander,
wobei das obere Abschlussmaterial (100) und die untere Isolationsplatte (300) kreuzweise aufeinander in einer solchen Art und Weise gelegt werden, um exponierte Bereiche einer Form " 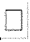 " oder "∟" in Bezug aufeinander aufzuweisen, **dadurch gekennzeichnet, dass**
der Kunststein aus Zementpaste hergestellt wird, enthaltend 100 Gewichtsteile Zement, 170 - 250 Gewichtsteile Naturchips mit einer Länge von 3 mm bis 9 mm, 70 - 100 Gewichtsteile Naturchips mit einer Länge von 1 mm bis 3 mm, 30 - 100 Gewichtsteile Natursteinpulver mit einem Durchmesser von 0,04 mm bis 0,14 mm, 25 - 35 Gewichtsteile Wasser und 1 - 3 Gewichtsteile eines Wasserreduktionsmittels,
wobei die Haftstoffschicht (200) einen Epoxyhaftstoff umfasst, und
wobei die untere Isolationsplatte (300) kreuzweise auf die obere Abschlussplatte (100) in einer solchen Art und Weise gelegt wird, um nach außen von dem oberen Abschlussmaterial (100) in einem Abstand von 10 mm bis 40 mm hervorzustehen.

4. Verfahren nach Anspruch 3, weiter umfassend den Schritt eines Druckbeaufschlagens der unteren Isolationsplatte (300) mittels eines Druckbeaufschlagers, nachdem die untere Isolationsplatte (300) auf die Unterseite des oberen Abschlussmaterials (100), auf der die Haftstoffschicht (200) gebildet wird, gelegt worden ist.

## Revendications

1. Panneau de pierre composé entièrement d'un matériau isolant pour un mur, le panneau de pierre comprenant :
un matériau de finition supérieur (100), le matériau de finition supérieur (100) étant de la pierre artificielle ;
un panneau isolant inférieur (300) ; et
une couche d'adhésif (200) pour le couplage unitaire l'un à l'autre du matériau de finition supérieur (100) et du panneau isolant inférieur (300),
le matériau de finition supérieur (100) et le panneau isolant inférieur (300) étant posés transversalement l'un sur l'autre, de façon à présenter des parties exposées en forme de « □ » ou de « I_» l'un relativement à l'autre,
**caractérisé en ce que**
la pierre artificielle est réalisée en pâte de ciment contenant 100 parties en poids de ciment, de 170 à 250 parties en poids de copeaux naturels mesurant de 3 mm à 9 mm de long, de 70 à 100 parties en poids de copeaux naturels mesurant de 1 mm à 3 mm de long, de 30 à 100 parties en poids de poudre de pierre mesurant de 0,04 mm à 0,14 mm de diamètre, de 25 à 35 parties en poids d'eau, et de 1 à 3 parties en poids d'agent réducteur d'eau,
la couche d'adhésif (200) comprenant un adhésif époxy, et
le panneau isolant inférieur (300) étant posé transversalement sur le matériau de finition supérieur (100), de façon à dépasser de 10 mm à 40 mm du matériau de finition supérieur (100) vers l'extérieur.

2. Panneau de pierre selon la revendication 1, le panneau isolant inférieur (300) étant composé d'un quelconque des suivants : un panneau EPS ; un panneau de polyuréthane ; u panneau de phénol ; un panneau de polyuréthane ; un panneau de vermiculite ; un panneau de PVC ; un panneau de PE ; et un panneau de PP.

3. Méthode de fabrication d'un panneau de pierre composé entièrement d'un matériau isolant pour un mur, la méthode comprenant les étapes suivantes :
la découpe d'un matériau de finition supérieur (100) d'une taille donnée, le matériau de finition supérieur (100) étant de la pierre artificielle ;
la découpe d'un panneau isolant inférieur (300) d'une taille égale ou supérieure à celle du matériau de finition supérieur (100) ;
l'application d'un adhésif sur la partie inférieure du matériau de finition supérieur (100) pour former la couche d'adhésif (200) ; et
la pose du panneau isolant inférieur (300) sur la partie inférieure du matériau de finition supérieur (100) sur laquelle a été constituée la couche d'adhésif (200), le durcissement de la couche d'adhésif (200) et le couplage unitaire, l'un à l'autre, du matériau de finition supérieur (100) au panneau isolant inférieur (300),
le matériau de finition supérieur (100) et le panneau isolant inférieur (300) étant posés transversalement l'un sur l'autre, de façon à présenter des parties exposées en forme de « □ » ou de « I_» l'un relativement à l'autre,
**caractérisée en ce que**
la pierre artificielle est réalisée en pâte de ciment contenant 100 parties en poids de ciment, de 170 à 250 parties en poids de copeaux naturels mesurant de 3 mm à 9 mm de long, de 70 à 100 parties en poids de copeaux naturels mesurant de 1 mm à 3 mm de long, de 30 à 100 parties en poids de poudre de pierre mesurant de 0,04 mm à 0,14 mm de diamètre, de 25 à 35 parties en poids d'eau, et de 1 à 3 parties en poids d'agent réducteur d'eau,
la couche d'adhésif (200) comprenant un adhésif époxy, et
le panneau isolant inférieur (300) étant posé transversalement sur le matériau de finition supérieur (100), de façon à dépasser de 10 mm à 40 mm du matériau de finition supérieur (100) vers l'extérieur.

4. Méthode selon la revendication 3, comprenant en outre l'étape de mise sous pression du panneau isolant inférieur (300) à l'aide d'un pressuriseur, après la pose du panneau isolant inférieur (300) sur la partie inférieure du matériau de finition supérieur (100) sur lequel la couche d'adhésif (200) est formée.
